# FASCICULE DE BREVET EUROPEEN

(11) **EP 3 240 639 B1**
(45) Date de publication et mention de la délivrance du brevet: **08.01.2020**
(21) Numéro de dépôt: 15832809.6
(22) Date de dépôt: 21.12.2015
(51) Int. Cl.: B05D 5/06, B05D 5/08, B05D 3/04, B05D 3/12, B05D 3/02

(54) **PROCEDE DE DECORATION D'UN ARTICLE CULINAIRE PAR TRAITEMENT MECANIQUE**
VERFAHREN ZUM DEKORIEREN EINES KÜCHENELEMENTS DURCH MECHANISCHE BEHANDLUNG
METHOD FOR DECORATING A KITCHEN ITEM BY MECHANICAL TREATMENT

(30) Priorité: 30.12.2014 FR 1463442
(43) Date de publication de la demande: 08.11.2017
(73) Titulaire: SEB S.A., 69130 Ecully (FR)
(72) Inventeur: DUBANCHET, Aurélien, 73100 Gresy Sur Aix (FR); CAILLIER, Laurent, 74370 Pringy (FR); BUFFAULT, Germain, 74960 Cran Gevrier (FR)
(74) Mandataire: Soares, Luis Filipe
(86) Numéro de dépôt international: PCT/FR2015/053691
(87) Numéro de publication internationale: WO 2016/108008

(56) Documents cités:
- EP-A1- 1 710 214
- EP-A1- 2 412 846
- EP-A1- 2 578 323
- DE-A1-102010 052 057
- US-A1- 2007 178 243

## Description

La présente invention concerne de manière générale un procédé de décoration d'un article culinaire par traitement mécanique en vue d'obtenir un décor.

Les articles culinaires doivent bien sûr répondre à des critères de performance quant à leur anti-adhésivité, leur résistance à la rayure et plus généralement aux multiples agressions auxquelles ils sont soumis en usage.

Toutefois, les consommateurs recherchent aujourd'hui des objets de plus en plus esthétiques. Si l'esthétique peut être apportée par une forme particulière, la couleur ou la multiplicité de couleurs, les effets « matières », la texture au toucher, la richesse des décors sont aussi de plus en plus attendus par ces consommateurs. Il est donc nécessaire de développer des procédés permettant l'obtention de ces effets. Les revêtements à base de résine fluorocarbonée ou en émail sont concernés, mais les revêtements céramiques, apparus ces dernières années, n'échappent pas non plus à cette demande. La nouveauté de leur chimie, puis une palette de couleurs élargie, ont suffi dans un premier temps à susciter l'intérêt des consommateurs. Il apparait maintenant que, pour continuer à séduire ceux-ci, de nouveaux effets et les procédés permettant de les réaliser doivent être mis en œuvre.

Pour répondre à cette demande, la Demanderesse a développé des procédés particulièrement adaptés à ce type de revêtements pour obtenir de tels effets.

D'une manière générale, ces effets se répartissent en deux catégories, selon qu'il s'agit de décors réalistes, ou d'effets « matières ».

Les décors réalistes sont obtenus par transfert d'un décor préexistant d'un film sur le revêtement. Le transfert peut être réalisé par contact en milieu aqueux, par sublimation, par tampographie, par sérigraphie ou par jet d'encre.

Les effets « matières » sont réalisés par un traitement mécanique d'une des couches du revêtement permettant la visibilité, éventuellement simultanée, de différentes couches.

La présente invention concerne plus particulièrement l'obtention de décors par un traitement mécanique du revêtement de l'article, consistant par exemple en l'obtention d'une empreinte négative par enlèvement ou gravage d'une couche supérieure du revêtement ou d'un déplacement de matière de la couche supérieure du revêtement, pour créer une texturation au toucher à la surface de l'article et/ou faire apparaître la couleur sous-jacente (du support ou d'une couche intermédiaire entre le support et la couche supérieure).

Il est connu de l'homme de l'art de traiter un revêtement en vue d'en modifier l'apparence pour obtenir un effet.

Ainsi par exemple, le brevet américain US 779,655 décrit l'application d'un courant d'air puissant sur la couche supérieure humide d'un revêtement en émail pour en modifier l'apparence, et obtenir ainsi un revêtement présentant un aspect tacheté, ondulé ou panaché. Ce document décrit un procédé comprenant l'application d'une première couche d'émail, la cuisson de cette première couche d'émail, l'application d'une seconde couche d'émail, la création du relief sur la surface de cette seconde couche d'émail humide, puis la cuisson de la seconde couche d'émail.

Le brevet français FR 2808732 décrit un ustensile de cuisson constitué d'un matériau métallique de base, qui est revêtu d'une couche de chrome dure, sur sa surface intérieure ou sa surface extérieure. Selon une première variante de réalisation, un marquage est réalisé sur la couche de chrome dure par une étape de décapage électrochimique local ou par sablage.

Le document EP 2 578 323 A1 décrit un procédé de dépôt d'un revêtement décoratif comportant deux couches superposées sur un article culinaire de type récipient de cuisson, le dit procédé faisant intervenir une étape de cuisson intermédiaire.

Au vu de l'art antérieur, la Demanderesse a développé des procédés permettant d'obtenir, dans des conditions énergétiques acceptables, des revêtements extérieurs décorés d'articles culinaires possédant de bonnes propriétés de résistance mécanique, d'antitachage, et d'adhérence.

Plus particulièrement, la présente invention a pour objet un procédé de décoration d'un article culinaire comprenant un support, ledit procédé comprenant les étapes suivantes :
- fourniture d'un support comprenant deux faces opposées ;
- application d'au moins une composition thermostable de fond sur une zone de l'une des surfaces du support pour former au moins une couche de fond, la composition thermostable de fond étant une composition sol-gel, ou une barbotine aqueuse de fritte d'émail ou une composition aqueuse comprenant une dispersion de résine fluorocarbonée ;
- application d'au moins une composition thermostable de décor sur la couche de fond pour former au moins une couche de décor, la composition de décor étant une composition sol-gel, ou une barbotine aqueuse de fritte d'émail ou une composition aqueuse comprenant une dispersion de résine fluorocarbonée ;
- traitement mécanique de la surface de la couche de décor afin de réaliser un décor, le traitement mécanique comprenant un enlèvement et/ou un déplacement d'une partie de la composition de décor par la pression et le déplacement d'un outil ou d'un jet d'air comprimé sur la surface de la couche de décor ;
- séchage de la couche de décor traitée mécaniquement lorsque la composition de décor est une barbotine aqueuse de fritte d'émail ou une composition aqueuse comprenant une dispersion de résine fluorocarbonée, et éventuellement lorsque la composition de décor est une composition sol-gel (le séchage de la couche de décor étant optionnel dans le cas d'une couche de décor obtenue à partir d'une composition sol-gel) ; et
- traitement thermique de densification du support revêtu,
aucun traitement thermique de densification du support revêtu n'étant effectué entre l'étape d'application de la composition de fond et l'étape d'application de la composition de décor.

Par composition thermostable, on entend, au sens de la présente invention, une composition permettant d'obtenir un revêtement qui, après traitement thermique de densification, ne subit aucune dégradation lorsqu'il est soumis aux températures d'usage culinaire, soit à des températures pouvant aller jusqu'à 280°C.

Par surface d'une couche, on entend, au sens de la présente invention, la surface de ladite couche qui est opposée au support.

Par séchage d'une couche, on entend, au sens de la présente invention, une étape du procédé qui permet d'évacuer la majorité des solvants (y compris l'eau) de ladite couche et ainsi d'obtenir ladite couche sous forme d'un film qui est suffisamment solide pour être sec au toucher, mais qui n'est pas complètement densifié, cette étape étant réalisée à une température inférieure ou égale à 120°C lorsque ladite couche est obtenue à partir d'une composition sol-gel ou d'une composition aqueuse comprenant une dispersion de résine fluorocarbonée, et inférieure ou égale à 300°C lorsque ladite couche est obtenue à partir d'une barbotine aqueuse de fritte d'émail.

Par traitement thermique de densification du support revêtu, on entend, au sens de la présente invention, un traitement thermique qui permet de densifier les couches appliquées sur le support, ce traitement thermique de densification étant réalisé à une température supérieure à 150°C lorsque lesdites couches sont obtenues à partir de compositions sol-gel et/ou de compositions aqueuses comprenant une dispersion de résine fluorocarbonée, et supérieure à 300°C lorsque lesdites couches sont obtenues à partir de barbotines aqueuses de fritte d'émail.

Le procédé selon l'invention exclut tout traitement thermique de densification du support revêtu entre l'étape d'application de la composition de fond et l'étape d'application de la composition de décor. Ainsi, l'ensemble du revêtement appliqué sur ladite zone du support est densifié en un seul traitement thermique de densification permettant d'obtenir un article culinaire décoré dans des conditions énergétiques acceptables.

Avantageusement, la composition de fond peut être de même nature que la composition de décor.

En d'autres termes, si la couche de décor est une couche de matériau sol-gel, il peut en être de même pour la couche de fond. De même, si la couche de décor est une couche à base de résine fluorocarbonée, il peut en être de même pour la couche de fond. Enfin, si la couche de décor est en émail, il peut en être de même pour la couche de fond.

De manière avantageuse, la surface de cette couche de fond peut être soumise à un traitement mécanique pour réaliser un décor. Ce traitement mécanique est tel que décrit ci-après en référence à la couche de décor.

Avantageusement, le procédé selon l'invention peut également comprendre, au niveau de la zone du support où sont formées les couches de fond et de décor, l'application d'au moins une couche supplémentaire, comme une couche de primaire d'accroche dans le cas d'une couche de fond à base de résine fluorocarbonée.

Le procédé selon l'invention peut également comprendre une étape de séchage de ladite couche de fond, éventuellement traitée mécaniquement de manière à réaliser un décor, lorsque la composition de fond est une composition sol-gel ou une composition aqueuse comprenant une dispersion de résine fluorocarbonée. Si elle est réalisée, cette étape de séchage doit alors être réalisée préalablement à l'étape d'application de la composition de décor.

Avantageusement, le séchage de la couche de fond avant l'application de la composition de décor permet de limiter les interactions entre la couche de fond et la couche de décor comme, par exemple, la détrempe qui est susceptible d'affaiblir localement le revêtement final.

Dans le procédé selon l'invention, on réalise après l'étape d'application de la composition de décor, et le cas échéant avant l'étape de séchage de la couche de décor, un traitement mécanique de la surface de la couche de décor afin de réaliser un décor, le traitement mécanique comprenant un enlèvement et/ou un déplacement d'une partie de la composition de décor par la pression et le déplacement d'un outil ou d'un jet d'air comprimé sur la surface de la couche de décor.

Selon une première variante du traitement mécanique, l'enlèvement et/ou le déplacement d'une partie de la composition de décor peuvent être réalisés par le déplacement en translation et la pression d'un outil ou d'un jet d'air comprimé sur la surface de la couche de décor, le support étant fixe.

Selon une deuxième variante du traitement mécanique, l'enlèvement et/ou le déplacement d'une partie de la composition de décor peuvent être réalisés par la pression d'un outil ou d'un jet d'air comprimé sur la surface de la couche de décor, alors que le support est déplacé en translation.

Selon une troisième variante du traitement mécanique, l'enlèvement et/ou le déplacement d'une partie de la composition de décor peuvent être réalisés par la pression d'un outil ou d'un jet d'air comprimé sur la surface de la couche de décor alors que l'outil ou le jet d'air comprimé est en rotation autour du support.

Selon une quatrième variante préférée du traitement mécanique, l'enlèvement et/ou le déplacement d'une partie de la composition de décor peuvent être réalisés par la pression d'un outil ou d'un jet d'air comprimé sur la surface de la couche de décor, alors que le support est en rotation.

Dans toutes ces variantes de réalisation, si l'enlèvement et/ou le déplacement sont réalisés par la pression d'un outil, l'outil peut avantageusement être l'un d'un pinceau, d'une brosse, d'un peigne, d'une éponge, ou d'un tampon abrasif.

Dans toutes ces variantes de réalisation, si l'enlèvement et/ou le déplacement sont réalisés par la pression d'un jet d'air, on utilise avantageusement des jets d'air comprimé pulvérisé par une ou plusieurs buses.

Avantageusement, le traitement mécanique selon la présente invention peut être réalisé de manière à faire apparaître, au moins partiellement, la couche de fond sous-jacente. Mais, le traitement mécanique du procédé selon l'invention peut tout aussi bien être réalisé de manière à ne pas faire apparaître, même partiellement, la couche de fond sous-jacente.

Si la couche de fond est soumise à un traitement mécanique de manière à réaliser un décor, ce traitement mécanique peut également être réalisé selon l'une quelconque des caractéristiques décrites ci-dessus relatives à la réalisation du traitement mécanique de la couche de décor.

De manière avantageuse, selon un mode de réalisation du procédé selon l'invention, au moins deux compositions thermostables de décor sont appliquées sur une zone de l'une des surfaces du support pour former au moins deux couches de décor, le traitement mécanique comprenant alors un enlèvement et/ou un déplacement d'une partie des compositions de décor. En d'autres termes, si le procédé comprend l'application de plusieurs couches de décor, elles sont toutes traitées mécaniquement en même temps, puis, si nécessaire, séchées également en même temps.

Toutes les caractéristiques décrites ci-dessus en référence au procédé comprenant l'application d'une composition de décor s'appliquent de manière analogue au procédé comprenant l'application de plusieurs compositions de décor.

En ce qui concerne le rendu visuel du décor, deux alternatives peuvent être envisagées.

Par rendu visuel, on entend, au sens de l'invention, la perception par l'utilisateur de l'aspect du décor en termes d'effet coloré, dû éventuellement à la présence de pigments et/ou de paillettes, et également en termes de transparence ou d'opacité.

Par couche ou composition transparente ou incolore, on entend, au sens de la présente invention, une couche ou composition qui se laisse traverser par la lumière sur l'ensemble du domaine visible et qui ne comprend ni pigment ni paillettes.

Par couche ou composition opaque, on entend, au sens de la présente invention, une couche ou composition qui ne laisse pas du tout passer la lumière dans le domaine visible. L'opacité peut par exemple provenir de la présence de pigments et/ou de paillettes dans la couche ou composition.

Par couche ou composition translucide, on entend, au sens de la présente invention, une couche ou composition qui laisse partiellement passer la lumière dans le domaine visible par exemple grâce à la présence de pigments et/ou de paillettes dans la couche ou composition.

Par couche ou composition colorée, on entend, au sens de la présente invention, une couche ou composition qui présente un rendu visuel avec un effet coloré, l'effet coloré pouvant être amené par des pigments et/ou des paillettes.

Selon une première alternative, la composition de décor, la composition de fond et le support présentent le même rendu visuel. Dans ce cas, le décor est uniquement un effet texturant au toucher.

Selon une variante de cette première alternative, la composition de décor peut comprendre au moins un pigment et/ou des paillettes et la composition de fond peut comprendre au moins un pigment et/ou des paillettes qui sont identiques à ceux de la composition de décor.

Selon une seconde alternative, la composition de décor et/ou la composition de fond et/ou le support ne présentent pas le même rendu visuel.

Selon une première variante de cette seconde alternative, la couche de fond peut être transparente, tandis que la couche de décor peut comprendre au moins un pigment et/ou des paillettes lui donnant un rendu visuel différent de celui du support.

Avantageusement, dans cette première variante, le traitement mécanique est réalisé afin de laisser apparaitre la couche de fond. Ainsi, le décor obtenu présente un effet « matière » par la différence de rendu visuel entre la couche de décor et le support visible à travers la couche de fond transparente, ainsi qu'un effet texturant au toucher.

Par effet « matière », on entend au sens de la présente invention, un rendu visuel du décor imitant par exemple le bois (effet bois), le marbre (effet marbre), le métal brossé (effet métal brossé)...

Selon une seconde variante de cette seconde alternative, la composition de décor peut comprendre au moins un pigment et/ou des paillettes et la composition de fond peut être opaque et comprendre au moins un pigment et/ou comprendre des paillettes qui sont différents de ceux de la composition de décor.

Avantageusement, dans cette deuxième variante, le traitement mécanique est réalisé afin de laisser apparaitre la couche de fond. Ainsi, le décor obtenu présente un effet « matière » par la différence de rendu visuel entre la couche de décor et la couche de fond, ainsi qu'un effet texturant au toucher.

De manière avantageuse, quelle que soit l'alternative envisagée (rendu visuel identique ou différent), la composition de décor et/ou la composition de fond peuvent comprendre au moins un pigment et/ou des paillettes.

A titre de pigments utilisables dans le cadre de la présente invention (pour la couche de fond et/ou la couche de décor notamment), on peut notamment citer les pigments thermostables organiques ou inorganiques.

De préférence, les pigments des compositions de fond et de décor peuvent être indépendamment choisis parmi le dioxyde de titane, les spinelles, les oxydes de fer, le rouge de pérylène, le violet dioxazine, les oxydes mixtes d'aluminium et de cobalt, les oxydes de chrome et les oxydes de cuivre.

Les paillettes utilisables dans le cadre de la présente invention (pour la couche de fond et/ou la couche de décor notamment) peuvent être indépendamment choisies parmi les paillettes d'aluminium enrobées et les paillettes de mica, et en particulier les paillettes de mica traitées pour donner un effet de couleur particulier.

On peut avantageusement utiliser, pour la mise en œuvre du procédé selon l'invention, des compositions aqueuses comprenant des dispersions de résine fluorocarbonée thermostable à titre de composition thermostable de décor et/ou de composition thermostable de fond.

Dans ces dispersions, la résine fluorocarbonée peut être utilisée seule ou en mélange avec au moins une autre résine thermostable résistant à au moins 200°C, et notamment une résine d'accrochage.

Les résines fluorocarbonées des compositions de fond et de décor peuvent être indépendamment choisies parmi le polytétrafluoroéthylène (PTFE), le copolymère de tétrafluoroéthylène et de perfluoropropylvinyléther (PFA), le copolymère de tétrafluoroéthylène et d'hexafluoropropylène (FEP) ou un mélange de ces résines fluorocarbonées.

Les éventuelles résines thermostables résistant à au moins 200°C peuvent être indépendamment choisies parmi les polyéthercétones (PEK), les polyétheréthercétones (PEEK), et les résines d'accrochage suivantes : les polyamides imides (PAI), les polyéthers imides (PEI), les polyimides (PI), les polyéthersulfures (PES) et les sulfures de polyphénylène (PPS).

Lorsque la composition de fond est une composition aqueuse comprenant une dispersion de résine fluorocarbonée, la composition de fond peut avantageusement comprendre en outre au moins un matériau promoteur de cohésion, matériau permettant de renforcer la résistance mécanique d'un film non encore densifié thermiquement.

Selon une première variante, le matériau promoteur de cohésion de la couche de fond peut être avantageusement choisi parmi les silices sous forme colloïdale ou de poudre micrométrique ou nanométrique, les alumines sous forme colloïdale ou de poudre micrométrique ou nanométrique, les carbonates sous forme colloïdale ou de poudre micrométrique ou nanométrique, la laponite sous forme colloïdale ou de poudre micrométrique ou nanométrique, et les agents épaississants de type inorganique (tels que les zéolites).

Selon une seconde variante, le matériau promoteur de cohésion de la couche de fond peut être avantageusement choisi parmi les dérivés de cellulose présentant des températures minimales de formation de film inférieures à 200°C, et de préférence inférieures à 80°C et les (co)polymères (méth)acryliques thermoplastiques présentant des températures minimales de formation de film inférieures à 200°C, et de préférence inférieures à 80°C.

De manière avantageuse, le matériau promoteur de cohésion de la couche de fond peut être présent dans la composition de fond à raison de 1 à 25 % en poids, et de préférence entre 2 et 15 % en poids, par rapport au poids total de la composition de fond.

Lorsque la composition de fond est une composition aqueuse comprenant une dispersion de résine fluorocarbonée, la couche de fond peut avantageusement présenter, avant l'étape de traitement mécanique éventuelle, une épaisseur humide comprise entre 10 et 50 µm, et de préférence entre 15 et 30 µm.

Dans le cas où la composition de fond est une composition aqueuse comprenant une dispersion de résine fluorocarbonée, le procédé selon l'invention peut avantageusement comprendre, entre l'application de la composition de fond (ou l'éventuel traitement mécanique de la surface de la couche de fond) et l'application de la composition de décor, une étape de séchage de la couche de fond qui peut être réalisée à une température comprise entre 25 et 100°C, et de préférence entre 40 et 80°C.

Lorsque la composition de décor est une composition aqueuse comprenant une dispersion de résine fluorocarbonée, la couche de décor peut avantageusement présenter, avant l'étape de traitement mécanique, une épaisseur humide comprise entre 5 et 100 µm, et de préférence entre 8 et 40 µm.

Dans le cas où la composition de décor est une composition aqueuse comprenant une dispersion de résine fluorocarbonée, le procédé selon l'invention comprend, entre l'étape de traitement mécanique de la surface de la couche de décor et l'étape de traitement thermique de densification, une étape de séchage de la couche de décor qui peut être réalisée à une température comprise entre 20 et 100°C, et de préférence entre 40 et 80°C.

Après le séchage de la couche de décor, on procède, conformément au procédé selon l'invention, à un traitement thermique de densification. Lorsque la composition de décor et/ou la composition de fond sont des compositions aqueuses comprenant des dispersions de résine fluorocarbonée, le traitement thermique de densification peut avantageusement consister en une cuisson réalisée à une température comprise entre 350 et 450°C, et de préférence entre 380 et 430°C.

On peut également avantageusement utiliser, pour la mise en œuvre du procédé selon l'invention, des compositions sol-gel à titre de composition thermostable de décor et/ou de composition thermostable de fond.

De manière avantageuse, ces compositions sol-gel peuvent être obtenues par hydrolyse d'un précurseur sol-gel de type alcoxyde métallique, par introduction d'eau et d'un catalyseur acide ou basique, puis par condensation.

On utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)(ₙ-₁)R₂', et
- les précurseurs répondant à la formule générale M₃(OR₃)(ₙ-₂)R₃', avec :
   - R₁, R₂, R₃ ou R₃' désignant un groupement alkyle,
   - R₂' désignant un groupement alkyle éventuellement fonctionnalisé ou un groupement phényle éventuellement fonctionnalisé,
   - n étant un nombre entier correspondant à la valence maximale des M₁, M₂ ou M₃,
   - M₁ M₂ ou M₃ désignant un élément choisi parmi Si, Zr, Ti, Sn, Al, Ce, V, Nb, Hf, Mg ou les lanthanides (Ln).

Avantageusement, l'alcoxyde métallique est un alcoxysilane.

A titre d'alcoxysilanes utilisables dans les compositions sol-gel du procédé de l'invention, on peut notamment citer le méthyltriméthoxysilane (MTMS), le méthyltriéthoxysilane (MTES), le tétraéthoxysilane (TEOS), le tétraméthoxysilane (TMOS), et le 3-glycidoxypropyltriméthoxysilane (GLYMO), l'aminopropyl-triéthoxysilane (APTES) et leurs mélanges.

De manière préférée, on utilise les alcoxysilanes MTES et TEOS, car ils présentent l'avantage de ne pas contenir de groupements méthoxy. En effet, l'hydrolyse des groupements méthoxy conduit à la formation de méthanol dans la formulation sol-gel, ce qui, compte tenu de son classement toxique, nécessite des précautions supplémentaires lors de l'application. A contrario, l'hydrolyse des groupements éthoxy ne génère que de l'éthanol possédant un classement plus favorable et donc des prescriptions d'utilisations moins contraignantes pour le revêtement sol-gel.

Lorsque la composition de fond est une composition sol-gel, la couche de fond peut avantageusement présenter, avant l'étape de traitement mécanique éventuelle, une épaisseur humide comprise entre 10 et 100 µm, et de préférence entre 30 et 70 µm.

Dans le cas où la composition de fond est une composition sol-gel, le procédé selon l'invention peut avantageusement comprendre, entre l'application de la composition de fond (ou l'éventuel traitement mécanique de la surface de la couche de fond) et l'application de la composition de décor, une étape de séchage de la couche de fond qui peut être réalisée à une température comprise entre 20 et 100°C, et de préférence entre 40 et 80°C.

Lorsque la composition de décor est une composition sol-gel, la couche de décor peut avantageusement présenter, avant l'étape de traitement mécanique, une épaisseur humide comprise 5 et 70 µm, et de préférence entre 10 et 30 µm.

Dans le cas où la composition de décor est une composition sol-gel, le procédé selon l'invention peut avantageusement comprendre, entre l'étape de traitement mécanique de la surface de la couche de décor et l'étape de traitement thermique de densification, une étape de séchage de la couche de décor qui peut être réalisée à une température comprise entre 20 et 120°C, et de préférence entre 40 et 100°C. Dans le cas où la composition de décor est une composition sol-gel, l'étape de séchage de la couche de décor est optionnelle.

Après le séchage éventuel de la couche de décor, on procède, conformément au procédé selon l'invention, à un traitement thermique de densification du support revêtu. Lorsque la composition de décor et la composition de fond sont des compositions sol-gel, le traitement thermique de densification peut avantageusement consister en une cuisson réalisée à une température supérieure à 150°C et inférieure ou égale à 350°C, et de préférence comprise entre 200 et 300°C.

On peut aussi avantageusement utiliser, pour la mise en œuvre du procédé selon l'invention, des barbotines aqueuses de fritte d'émail à titre de compositions thermostables de décor et de fond.

De manière avantageuse, les barbotines aqueuses de fritte d'émail peuvent contenir une fritte d'émail constituée majoritairement d'oxyde de silicium, mélangé à des fondants de type oxydes de fer, de vanadium, de bore, de sodium ou de potassium.

Lorsque la composition de fond est une barbotine aqueuse de fritte d'émail, la couche de fond peut avantageusement présenter, avant l'étape de traitement mécanique éventuelle, une épaisseur humide comprise entre 30 et 120 µm, et de préférence entre 40 et 90 µm.

Lorsque la composition de fond est une barbotine aqueuse de fritte d'émail, le séchage de la couche de fond avant l'application de la composition de décor est exclu. En effet, si la couche de fond à base d'émail devait être séchée, des retraits et des piqures de cette couche apparaitraient lors du traitement thermique de densification du support revêtu, ce qui créerait un revêtement non conforme.

Lorsque la composition de décor est une barbotine aqueuse de fritte d'émail, la couche de décor peut avantageusement présenter, avant l'étape de traitement mécanique, une épaisseur humide comprise entre 10 et 80 µm, et de préférence entre 15 et 60 µm.

Dans le cas où les compositions de décor et de fond sont des barbotines aqueuses de fritte d'émail, le procédé selon l'invention comprend, entre l'étape de traitement mécanique de la surface de la couche de décor et l'étape de traitement thermique de densification, une étape de séchage de la couche de décor qui peut être réalisée à une température comprise entre 40 et 300°C, et de préférence entre 80 et 200°C.

Après le séchage de la couche de décor, on procède, conformément au procédé selon l'invention, à un traitement thermique de densification du support revêtu. Lorsque les compositions de décor et de fond sont des barbotines aqueuses de fritte d'émail, le traitement thermique de densification peut avantageusement consister en une cuisson réalisée à une température comprise entre 550 et 1000°C.

De manière avantageuse, le procédé selon l'invention peut en outre comprendre, avant le traitement thermique de densification du support revêtu, une étape d'application d'au moins une composition thermostable de finition translucide sur la couche de décor éventuellement séchée pour former une couche de finition, et une étape de séchage de la couche de finition lorsque la composition de finition est une barbotine aqueuse de fritte d'émail ou une composition aqueuse comprenant une dispersion de résine fluorocarbonée, et éventuellement lorsque la composition de finition est une composition sol-gel.

Avantageusement, la composition de finition est de même nature que la composition de décor.

De manière avantageuse, la composition de finition peut comprendre au moins un pigment et/ou comprendre des paillettes, les pigments et paillettes étant définis tels que précédemment en référence aux compositions de décor et de fond.

Si la composition de finition est une composition aqueuse comprenant une dispersion de résine fluorocarbonée, la couche de finition peut avantageusement présenter une épaisseur humide comprise entre 5 et 80 µm, et de préférence entre 10 et 40 µm.

Si la composition de finition est une composition sol-gel, la couche de finition peut avantageusement présenter une épaisseur humide comprise entre 2 et 20 µm, et de préférence entre 5 et 15 µm.

Si la composition de finition est une barbotine aqueuse de fritte d'émail, la couche de finition peut avantageusement présenter une épaisseur humide comprise entre 10 et 80 µm, et de préférence entre 15 et 60 µm.

Le procédé selon l'invention peut avantageusement comprendre une étape séchage de la couche de finition, qui peut être réalisée à une température comprise entre 25 et 100°C, et de préférence entre 40 et 80°C.

Les couches de fond, de décor et de finition peuvent, selon le procédé de la présente invention, être séchées. Le séchage de chacune de ces couches peut avantageusement consister en un séchage à l'air libre, un séchage sous radiation infrarouge courte, un séchage sous radiation infrarouge moyenne, un séchage sous air pulsé, ou un étuvage.

De manière avantageuse, le support de l'article culinaire utilisé dans le procédé selon l'invention a été mis en forme avant l'étape de fourniture du support. De préférence, il se présente sous la forme d'une calotte, les couches de fond et de décor étant appliquées sur l'extérieur de la calotte. En outre, de manière avantageuse, la zone du support sur laquelle sont appliquées les couches de fond et de décor est constituée de la jupe de la calotte.

On peut envisager différents types d'articles conformes à l'invention, de différentes formes et réalisés dans différents matériaux.

Ainsi, le support peut être un matériau métallique, en verre, en céramique et en terre cuite.

A titre de supports métalliques utilisables dans le procédé selon l'invention, on peut avantageusement citer les supports en aluminium anodisé ou non, éventuellement poli, brossé, sablé, ou microbillé, ou en alliage d'aluminium anodisé ou non, éventuellement poli, brossé, sablé ou microbillé, ou en acier éventuellement poli, brossé, sablé ou microbillé, ou en acier inoxydable éventuellement poli, brossé, sablé ou microbillé, ou en fonte d'acier, d'aluminium ou de fer, ou en cuivre éventuellement martelé ou poli.

A titre de supports métalliques utilisables dans le procédé selon l'invention, on peut encore citer les supports métalliques comprenant les couches suivantes acier inoxydable ferritique/aluminium/acier inoxydable austénitique ou encore acier inoxydable/aluminium/cuivre/aluminium/acier inoxydable austénitique, ou encore une calotte d'aluminium de fonderie, d'aluminium ou d'alliages d'aluminium doublée d'un fond extérieur en acier inoxydable.

L'article culinaire que l'on décore selon le procédé de l'invention est un article dont la face non revêtue au moins par la couche de décor est une face intérieure concave destinée à être disposée du côté d'aliments susceptibles d'être introduits dans ledit article, et une seconde desdites faces opposées est une face extérieure convexe destinée à être disposée vers une source de chaleur.

A titre d'exemples non limitatifs d'articles culinaires conformes à la présente invention, on peut citer notamment des articles culinaires tels que les casseroles et les poêles, les woks et les sauteuses, les fait-tout et les marmites les crêpières, les grills, les moules et plaques pour la pâtisserie, les plaques et grilles de barbecue, les bols de préparation.

Enfin, le procédé selon l'invention peut en outre comprendre une étape d'application, sur la face du support opposée à celle qui est munie des couches de fond et de décor, d'au moins une dispersion aqueuse de résine fluorocarbonée et/ou d'au moins une composition sol-gel pour former un revêtement antiadhésif, et éventuellement une étape de séchage du revêtement antiadhésif, ces étapes étant réalisées :
- avant l'étape éventuelle d'application de la composition de fond ou
- entre l'étape de séchage de la couche de décor traitée mécaniquement et l'étape de traitement thermique de densification du support revêtu ou
- en parallèle des étapes d'application (et, le cas échéant, de traitement mécanique et de séchage) de la couche de fond et des étapes d'application, de traitement mécanique (et, le cas échéant, de séchage) de la couche de décor lorsque
   - la couche de décor est obtenue à partir d'une composition sol-gel et le revêtement antiadhésif comprend une dispersion de résine fluorocarbonée, ou
   - la couche de décor est obtenue à partir d'une composition sol-gel et le revêtement antiadhésif comprend une composition sol-gel, ou
   - la couche de décor est obtenue à partir d'une composition aqueuse comprenant une dispersion de résine fluorocarbonée et le revêtement antiadhésif comprend une dispersion de résine fluorocarbonée,
   ou
- après le traitement thermique de densification du support revêtu, lorsque la couche de décor est obtenue à partir d'une barbotine aqueuse de fritte d'émail, ou
- après le traitement thermique de densification du support revêtu, lorsque la couche de décor est obtenue à partir d'une composition aqueuse comprenant une dispersion de résine fluorocarbonée et lorsque le revêtement antiadhésif comprend une composition sol-gel.

D'autres avantages et particularités de la présente invention résulteront de la description qui va suivre, donnée à titre d'exemple non limitatif et faite en référence aux exemples et aux figures annexées correspondantes :
- la figure 1 représente une vue schématique en coupe d'un article culinaire obtenu conformément au procédé selon l'invention selon une première variante de réalisation ;
- la figure 2 représente une vue schématique en coupe d'un article culinaire obtenu conformément au procédé selon l'invention selon une deuxième variante de réalisation ;
- les figures 3 à 11 sont décrites ci-après dans la partie descriptive relative aux exemples.

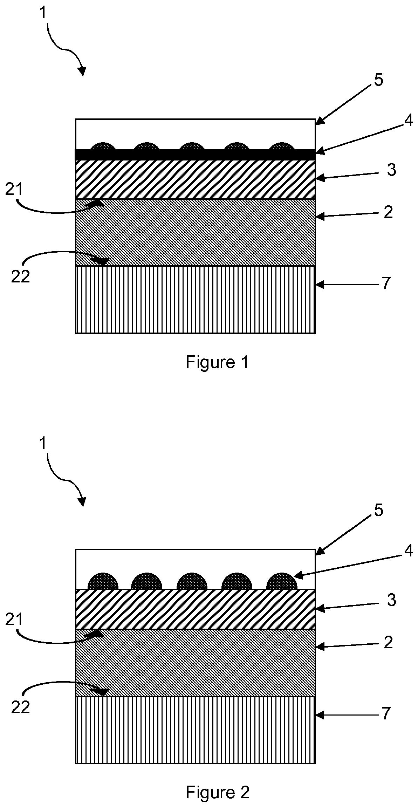

Les éléments identiques représentés sur les figures 1 et 2 sont identifiés par des références numériques identiques.

Sur les figures 1 et 2 annexées, on a représenté des portions d'article culinaire 1, qui comprennent chacune un support 2 en aluminium (comme dans les exemples décrits ci-après), présentant deux faces opposées 22 (face intérieure) et 21 (face extérieure). La face intérieure 22 est recouverte d'un revêtement antiadhésif 7, tandis que la face extérieure 21 est recouverte d'un revêtement décoré conformément au procédé selon l'invention.

Sur la figure 1, la face extérieure 21 du support 2 est pourvue d'une couche de fond 3 et d'une couche de décor. La couche de décor 4 a été traitée mécaniquement afin de créer un décor. Cependant, le traitement mécanique n'a pas laissé apparaître la couche de fond 3. Une couche de finition 5 translucide a été déposée sur la couche de décor 4 traitée mécaniquement.

La figure 2 se différencie de la figure 1, en ce que le traitement mécanique de la couche de décor 4 a été réalisé afin de faire apparaitre la couche de fond 3.

L'invention est illustrée plus en détail dans les exemples suivants.

Dans ces exemples, sauf indication contraire, tous les pourcentages et parties sont exprimés en pourcentages massiques.

### EXEMPLES

### Produits

### Outils de texturation :

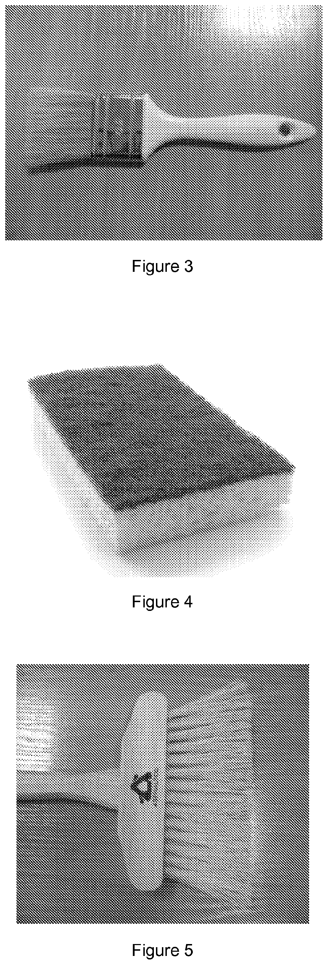

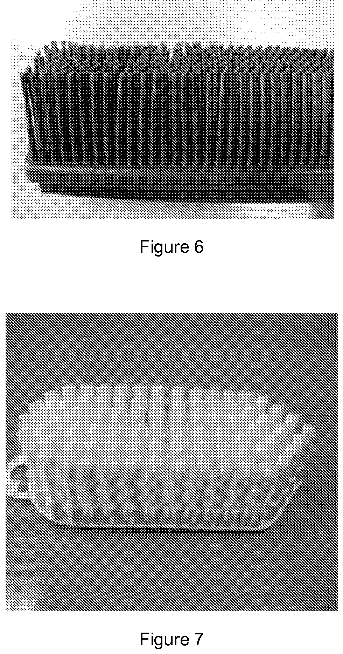

- Pinceau à poils souples naturels illustré sur la Figure 3
- Tampon Scotch-Brite® vert illustré sur la Figure 4
- Pinceau à poils durs en polyéthylène illustré sur la Figure 5
- Brosse à poils souples en silicone illustrée sur la Figure 6
- Brosse à poils durs en polyéthylène illustrée sur la Figure 7

### Supports :

- Calottes en aluminium sablées et dégraissées
- Calottes en aluminium lisses et traitées chimiquement (dégraissage, soude diluée, acide nitrique dilué, rinçage)

### Formulations de revêtements sol-gel :

- Silice colloïdale sous forme de solution aqueuse à 30 % de silice
- Silice colloïdale sous forme de solution aqueuse à 40 % de silice
- Isopropanol
- Butylglycol
- Huile de silicone à base de polydiméthylsiloxane (PDMS)
- Charge : alumine
- Précurseur sol-gel : méthyltriéthoxysilane (MTES) répondant à la formule Si(OC₂H₅)₃CH₃
- Acides :
   - acide formique
   - acide acétique
- Agent mouillant
- Pigments :
   - pigment inorganique blanc
   - pigment inorganique noir
   - pigment inorganique jaune

### Formulations de revêtements à base de résine fluorocarbonée :

- Dispersion aqueuse de PTFE à 60 % d'extrait sec
- Dispersion aqueuse de PFA à 50 % d'extrait sec
- Silice colloïdale à 30 % d'extrait sec
- Polymère acrylique hydrosoluble
- Tensioactif non chargé de type alkylphénoléthoxylate
- Dispersion de noir de carbone à 25 % d'extrait sec
- Résine PAI (à 10 % d'extrait sec) stabilisée dans l'eau avec des co-solvants
- Paillettes :
   - paillettes 1 de mica traitées pour donner un effet de couleur bleue
   - paillettes 2 de mica traitées pour donner un effet de couleur rouge
- Pigments :
   - pâte pigmentaire 1 de couleur marron
   - pâte pigmentaire 2 de couleur blanche

### Formulations de revêtements émail :

- Fritte d'émail
- Acide borique
- Potasse KOH
- Pigments :
   - pigment inorganique blanc
   - Pigment inorganique noir
   - Pigment inorganique jaune/vert

### Exemple 1 : Décoration de revêtements sol-gel.

Une composition sol-gel de fond SGF de couleur blanche opaque a été préparée, comportant les composés suivants, leurs quantités respectives étant indiquées ci-dessous :

| | |
|---|---|
| - Silice colloïdale (extrait sec de 30 %) | : 25,0 g |
| - Eau déminéralisée | : 9,0 g |
| - Isopropanol | : 4,0 g |
| - Huile silicone | : 1,0 g |
| - Pigment inorganique blanc | : 14,0 g |
| - Alumine | : 11,0 g |
| - MTES | : 35,5 g |
| - Acide formique | : 0,5 g |
| - TOTAL | : 100,0 g |

Une première composition sol-gel de décor SGD1 colorée et translucide a été préparée, comportant les composés suivants, dont les quantités respectives sont indiquées ci-dessous :

| | |
|---|---|
| - Silice colloïdale (extrait sec de 40 %) | : 29,0 g |
| - Eau déminéralisée | : 9,0 g |
| - Acide acétique | : 1,0 g |
| - Isopropanol | : 5,0 g |
| - Huile silicone | : 1,0 g |
| - MTES | : 40,0 g |
| - Butylglycol | : 12,0g |
| - Agent mouillant | : 1,0 g |
| - Pigment inorganique blanc | : 1,0 g |
| - Pigment inorganique jaune | : 0,7g |
| - Pigment inorganique noir | : 0,3 g |
| - TOTAL | : 100,0 g |

Une deuxième composition sol-gel de décor SGD2 opaque et de couleur noire a été préparée, comportant les composés suivants, leurs quantités respectives étant indiquées ci-dessous :

| | |
|---|---|
| - Silice colloïdale (extrait sec de 40 %) | : 30,0 g |
| - Eau déminéralisée | : 10,0 g |
| - Acide acétique | : 1,0 g |
| - Isopropanol | : 5,0 g |
| - Pigment inorganique noir | : 2,0 g |
| - Huile silicone | : 1,0 g |
| - MTES | : 40,0 g |
| - Butylglycol | : 10,0g |
| - Agent mouillant | : 1,0 g |
| - TOTAL | : 100,0 g |

Les compositions sol-gel détaillées ci-dessus ont été préparées comme suit :
- le précurseur sol-gel a été mélangé avec l'eau, les acides, les solvants, les pigments et la silice colloïdale afin d'obtenir le liant de chaque composition sol-gel ; la réaction est assez rapide (de quelques minutes à 1 heure) en fonction de la quantité de composition à produire ;
- les différents additifs et tensioactifs sont ensuite incorporés au mélange.

Les compositions sol-gel peuvent être stockées à température ambiante, ou en réfrigérateur afin de garantir une stabilité rhéologique maximale de plusieurs jours voir plusieurs semaines.

### Effet bois :

Une couche de fond de couleur blanche, d'une épaisseur humide d'environ 50 µm, a été appliquée par pulvérisation de la composition SGF sur l'extérieur de la jupe d'une calotte en aluminium préalablement sablée et dégraissée.

Une couche de décor de couleur marron, d'une épaisseur humide d'environ 10 µm, a ensuite été appliquée par pulvérisation de la composition SGD1 sur la couche de fond.

Cette couche de décor a été traitée mécaniquement, immédiatement après application, à l'aide d'un pinceau à poils durs en polyéthylène (tel que celui illustré par exemple sur la Figure 5) sous pression faible, afin de laisser apparaître la couche de fond sous-jacente. Le traitement mécanique a été réalisé sur la calotte en rotation.

L'ensemble a ensuite été séché à 80°C sous radiation infrarouge, puis cuit à 250°C durant 30 minutes.

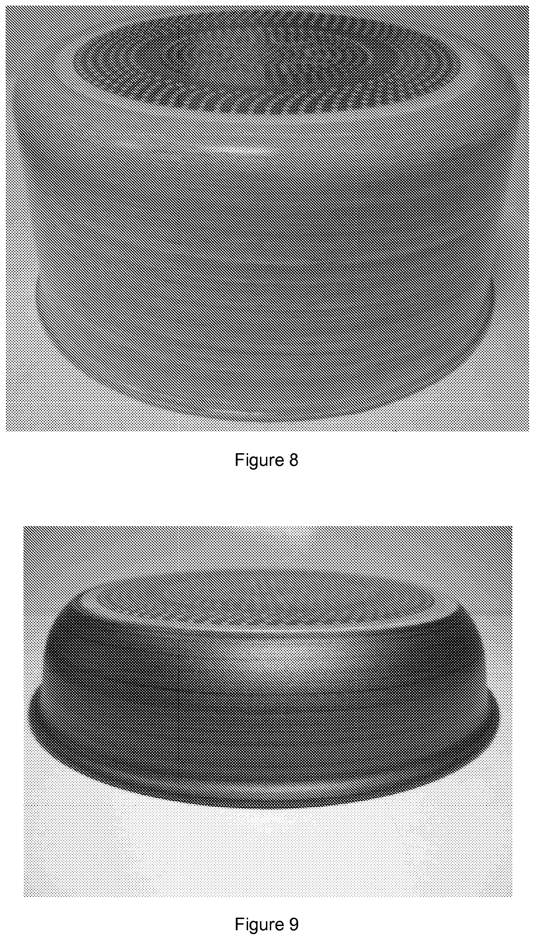

La calotte ainsi revêtue et décorée est illustrée par la Figure 8.

### Effet noir et blanc :

Une couche de fond de couleur blanche, d'une épaisseur humide d'environ 40 µm, a été appliquée par pulvérisation de la composition SGF sur l'extérieur de la jupe d'une calotte en aluminium préalablement sablée et dégraissée.

La couche de fond a ensuite été séchée à 70°C durant 1 minute sous radiation infrarouge, puis refroidie à température ambiante.

Une couche de décor de couleur noire, d'une épaisseur humide d'environ 15 µm, a ensuite été appliquée par pulvérisation de la composition SGD2 sur la couche de fond.

Cette couche de décor a été traitée mécaniquement, immédiatement après application, à l'aide d'un tampon Scotch-Brite® vert (tel que celui illustré par exemple sur la Figure 4) sous pression faible, afin de laisser apparaître la couche de fond sous-jacente. Le traitement mécanique a été réalisé sur la calotte en rotation.

L'ensemble a ensuite été séché à 100°C sous radiation infrarouge puis cuit à 250°C durant 30 minutes.

La calotte ainsi revêtue et décorée est illustrée par la Figure 8.

### Exemple 2 : Décoration de revêtements à base de PTFE.

Une première composition de fond opaque CF1 de couleur noire a été préparée, comportant les composés suivants, leurs quantités respectives étant indiquées ci-dessous :

| | |
|---|---|
| - Dispersion de PTFE | : 35 g |
| - Dispersion de PFA | : 5 g |
| - Silice colloïdale | : 10 g |
| - Polymère acrylique hydrosoluble | : 5 g |
| - Tensioactif | : 1 g |
| - Noir de carbone | : 4 g |
| - Résine PAI | : 30 g |
| - Eau déminéralisée | : 10 g |
| - TOTAL | : 100g |

Une deuxième composition de fond opaque CF2 de couleur marron a été préparée, comportant les composés suivants, leurs quantités respectives étant indiquées ci-dessous :

| | |
|---|---|
| - Dispersion de PTFE | : 70 g |
| - Dispersion de PFA | : 5 g |
| - Silice colloïdale | : 5 g |
| - Polymère acrylique hydrosoluble | : 5 g |
| - Tensioactif | : 2 g |
| - Pâte pigmentaire 1 | : 5g |
| - Eau déminéralisée | : 8 g |
| - TOTAL | : 100g |

Une première composition de décor opaque CD1 pailletée et de couleur rouge a été préparée, comportant les composés suivants, leurs quantités respectives étant indiquées ci-dessous :

| | |
|---|---|
| - Dispersion de PTFE | : 80 g |
| - Dispersion de PFA | : 5 g |
| - Polymère acrylique hydrosoluble | : 1 g |
| - Tensioactif | : 2 g |
| - Paillettes 2 | : 5g |
| - Eau déminéralisée | : 7 g |
| - TOTAL | : 100g |

Une deuxième composition de décor opaque CD2 pailletée et de couleur bleue a été préparée, comportant les composés suivants, leurs quantités respectives étant indiquées ci-dessous :

| | |
|---|---|
| - Dispersion de PTFE | : 80 g |
| - Dispersion de PFA | : 5 g |
| - Polymère acrylique hydrosoluble | : 1 g |
| - Tensioactif | : 2 g |
| - Paillettes 1 | : 5g |
| - Eau déminéralisée | : 7 g |
| - TOTAL | : 100g |

Une troisième composition de décor opaque CD3 de couleur blanche a été préparée, comportant les composés suivants, dont les quantités respectives sont indiquées ci-dessous :

| | |
|---|---|
| - Dispersion de PTFE | : 80 g |
| - Dispersion de PFA | : 5 g |
| - Polymère acrylique hydrosoluble | : 1 g |
| - Tensioactif | : 2 g |
| - Pâte pigmentaire 2 | : 5 g |
| - Eau déminéralisée | : 7 g |
| - TOTAL | : 100g |

Une composition de finition CFin incolore et transparente a été préparée, comportant les composés suivants, leurs quantités respectives étant indiquées ci-dessous :

| | |
|---|---|
| - Dispersion de PTFE | : 80 g |
| - Dispersion de PFA | : 5 g |
| - Polymère acrylique hydrosoluble | : 5 g |
| - Eau déminéralisée | : 10 g |
| - TOTAL | : 100g |

### Effet métal brossé rouge :

Une couche de fond de couleur noire, d'une épaisseur humide d'environ 20 µm, a été appliquée par pulvérisation de la composition CF1 sur l'extérieur de la jupe d'une calotte en aluminium préalablement sablée et dégraissée.

La couche de fond a ensuite été séchée à 80°C sous radiation infrarouge, puis refroidie à température ambiante.

Une couche de décor de couleur rouge, d'une épaisseur humide d'environ 20 µm, a ensuite été appliquée par pulvérisation de la composition CD1 sur la couche de fond.

Cette couche de décor a été traitée mécaniquement, immédiatement après application, à l'aide d'un pinceau à poils souples naturels (tel que celui illustré par exemple sur la Figure 3) humidifié sous pression faible, afin de laisser apparaître la couche de fond sous-jacente. Le traitement mécanique a été réalisé sur la calotte en rotation.

L'ensemble a ensuite été séché à 80°C sous radiation infrarouge puis cuit à 430°C pendant 11 minutes.

La calotte ainsi revêtue et décorée est illustrée par la Figure 9.

### Effet métal brossé bleu avec couche de finition :

Une couche de fond de couleur noire, d'une épaisseur humide d'environ 20 µm, a été appliquée par pulvérisation de la composition CF1 sur l'extérieur de la jupe d'une calotte en aluminium préalablement sablée et dégraissée.

La couche de fond a ensuite été séchée à 80°C sous radiation infrarouge, puis refroidie à température ambiante.

Une couche de décor de couleur bleu, d'une épaisseur humide d'environ 20 µm, a ensuite été appliquée par pulvérisation de la composition CD2 sur la couche de fond.

Cette couche de décor a été traitée mécaniquement, immédiatement après application, à l'aide d'une brosse à poils souples en silicone (telle que celle illustrée par exemple sur la Figure 6) sous pression faible, afin de laisser apparaître la couche de fond sous-jacente. Le traitement mécanique a été réalisé sur la calotte en rotation.

La couche de décor traitée mécaniquement a été séchée à 80°C sous radiation infrarouge, puis refroidie à température ambiante.

Une couche de finition, d'une épaisseur humide d'environ 30 µm, a enfin été appliquée par pulvérisation de la composition CFin sur la couche de décor.

L'ensemble a ensuite été séché à 80°C sous radiation infrarouge puis cuit à 430°C pendant 11 minutes.

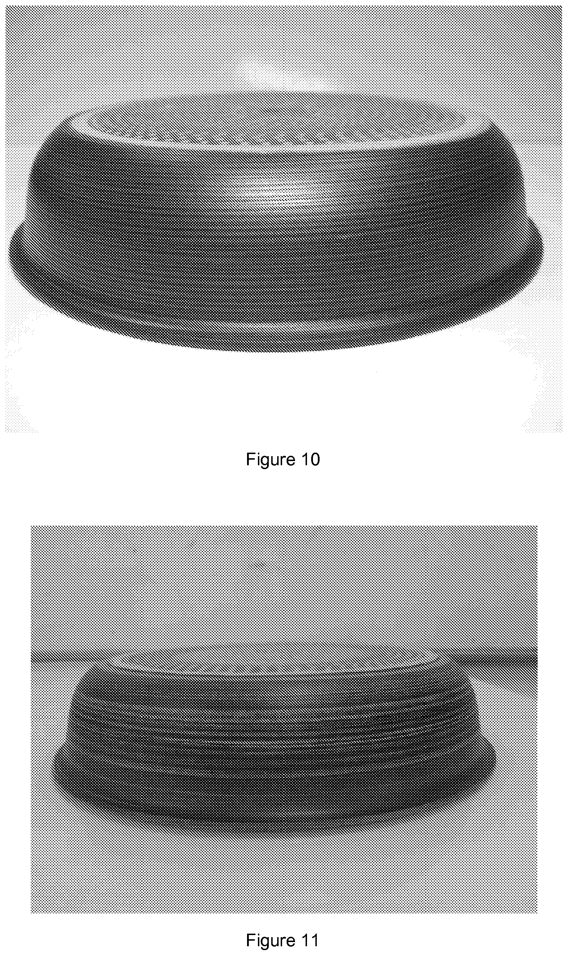

La calotte ainsi revêtue et décorée est illustrée par la Figure 10.

### Effet bois :

Une première couche de fond de couleur noire, d'une épaisseur humide d'environ 15 µm, a été appliquée par pulvérisation de la composition CF1 sur l'extérieur de la jupe d'une calotte en aluminium préalablement sablée et dégraissée.

La première couche de fond a ensuite été séchée à 80°C sous radiation infrarouge, puis refroidie à température ambiante.

Une seconde couche de fond de couleur marron, d'une épaisseur humide d'environ 15 µm, a été appliquée par pulvérisation de la composition CF2 sur la première couche de fond puis séchée à 80°C sous radiation infrarouge, et refroidie à température ambiante.

Une couche de décor de couleur blanche, d'une épaisseur humide d'environ 15 µm, a ensuite été appliquée par pulvérisation de la composition CD3 sur la seconde couche de fond.

Cette couche de décor a été traitée mécaniquement, immédiatement après application, à l'aide d'un pinceau à poils souples humidifié (tel que celui illustré par exemple sur la Figure 3) sous pression faible, afin de laisser apparaître la couche de fond sous-jacente. Le traitement mécanique a été réalisé sur la calotte en rotation.

L'ensemble a ensuite été séché à 80°C sous radiation infrarouge puis cuit à 430°C pendant 11 minutes.

La calotte ainsi revêtue et décorée est illustrée par la Figure 11.

### Exemple 3 : Décoration de revêtements émail.

Une composition de fond opaque EF de couleur jaune citronnelle a été préparée, comportant les composés suivants, leurs quantités respectives étant indiquées ci-dessous :

| | |
|---|---|
| - Fritte d'émail | : 57,0 g |
| - Acide borique | : 2,0 g |
| - Potasse KOH | : 0,5 g |
| - Pigment inorganique blanc | : 1,5 g |
| - Pigment inorganique jaune/vert | : 7,0 g |
| - Eau déminéralisée | : 32,0 g |
| - TOTAL | : 100,0 g |

Une composition de décor opaque ED de couleur noire a été préparée, comportant les composés suivants, leurs quantités respectives étant indiquées ci-dessous :

| | |
|---|---|
| - Fritte d'émail | : 59,0 g |
| - Acide borique | : 2,0 g |
| - Potasse KOH | : 0,5 g |
| - Pigment inorganique noir | : 5,5 g |
| - Eau déminéralisée | : 33,0 g |
| - TOTAL | : 100,0 g |

Une couche de fond de couleur jaune citronnelle, d'une épaisseur humide d'environ 60 µm, a été appliquée par pulvérisation à partir de la composition EF sur l'extérieur de la jupe et le fond d'une calotte en aluminium lisse et préalablement traitée chimiquement.

Une couche de décor de couleur noire, d'une épaisseur humide d'environ 40 µm, a ensuite été appliquée par pulvérisation de la composition ED sur la couche de fond.

Cette couche de décor a été traitée mécaniquement, immédiatement après application, à l'aide d'une brosse à poils durs en polyéthylène (telle que celle illustrée par exemple sur la Figure 7) sous pression faible, afin de laisser apparaître la couche de fond sous-jacente. Le traitement mécanique a été réalisé sur la calotte en rotation.

L'ensemble a ensuite été séché à 120°C sous radiation infrarouge puis cuit à 560°C pendant 15 minutes.

### Tests

### Test de tachage extérieur

Les calottes obtenues dans les exemples ci-dessus ont été testées en conditions réelles de cuisine afin d'évaluer un éventuel impact du traitement mécanique sur les propriétés de résistance au tachage du revêtement obtenu. 3 cycles successifs de cuisson ont été réalisés :
- Pommes de terre
- Steaks hachés
- Haricots

L'évaluation de la résistance au tachage a été effectuée visuellement en observant les éventuelles taches, projections, coulures sur la jupe extérieure de chaque calotte.

Il a été observé que la décoration du revêtement extérieur des calottes selon les exemples ci-dessus n'impacte pas la résistance au tachage dudit revêtement extérieur lors de l'usage culinaire.

### Test de résistance mécanique

Les calottes obtenues dans les exemples ci-dessus ont été testées par des tests de choc à la bille réalisés avec un pistolet pour comparer la résistance mécanique du revêtement extérieur des calottes obtenues dans les exemples ci-dessus à des revêtements extérieurs équivalents mais n'ayant pas subi de traitement mécanique de décoration.

Différentes forces ont été appliquées : 10 N, 20 N, 30 N, 40 N, 50 N, 60 N, 80 N et 90 N.

Il n'a été observé aucune différence de résistance mécanique entre les revêtements non décorés et les revêtements décorés des calottes obtenues dans les exemples ci-dessus.

### Test de tenue pour les calottes dont le revêtement extérieur est à base de résine fluorocarbonée

Les calottes décorées obtenues dans les exemples ci-dessus et des calottes pourvues de revêtements extérieurs équivalents n'ayant pas subi de traitement mécanique de décoration ont été soumises au test de quadrillage selon les normes NF D 21-511 et NF T 30-068.

La jupe des différentes calottes a été découpée afin d'obtenir des échantillons qui ont ensuite été immergés selon 3 cycles successifs de vieillissement comprenant chacun :
- 3 heures d'immersion dans une cuve remplie l'eau à 100°C, et
- 3 heures d'immersion dans une cuve remplie d'huile d'arachide à 200°C.

L'adhérence au métal des revêtements extérieurs de toutes les calottes testées a été jugée conforme.

### Test de vieillissement au lave-vaisselle

Les calottes décorées obtenues dans les exemples ci-dessus et des calottes pourvues de revêtements extérieurs équivalents n'ayant pas subi de traitement mécanique de décoration ont été soumises à 50 cycles successifs de lavage au lave-vaisselle (produit de lavage SUN).

Aucune dégradation n'a été relevée sur l'ensemble des calottes testées.

## Revendications

1. Procédé de décoration d'un article culinaire (1) comprenant un support (2), ledit procédé comprenant les étapes suivantes :
- fourniture d'un support (2) comprenant deux faces opposées (21, 22) ;
- application d'au moins une composition thermostable de fond sur une zone de l'une des surfaces (21) du support (2) pour former au moins une couche de fond (3), la composition thermostable de fond étant une composition sol-gel, ou une barbotine aqueuse de fritte d'émail ou une composition aqueuse comprenant une dispersion de résine fluorocarbonée ;
- application d'au moins une composition thermostable de décor sur la couche de fond (3) pour former au moins une couche de décor (4), la composition thermostable de décor étant une composition sol-gel, ou une barbotine aqueuse de fritte d'émail ou une composition aqueuse comprenant une dispersion de résine fluorocarbonée ;
- traitement mécanique de la surface de la couche de décor (4) afin de réaliser un décor, le traitement mécanique comprenant un enlèvement et/ou un déplacement d'une partie de la composition thermostable de décor par la pression et le déplacement d'un outil ou d'un jet d'air comprimé sur la surface de la couche de décor (4) ;
- séchage de la couche de décor (4) traitée mécaniquement lorsque la composition thermostable de décor est une barbotine aqueuse de fritte d'émail ou une composition aqueuse comprenant une dispersion de résine fluorocarbonée, et éventuellement lorsque la composition thermostable de décor est une composition sol-gel ; et
- traitement thermique de densification du support (2) revêtu,
aucun traitement thermique de densification du support revêtu n'étant effectué entre l'étape d'application de la composition thermostable de fond et l'étape d'application de la composition thermostable de décor et
l'article culinaire étant un article dont la face non revêtue au moins par la couche de décor est une face intérieure concave destinée à être disposée du côté d'aliments susceptibles d'être introduits dans ledit article, et une seconde desdites faces opposées est une face extérieure convexe destinée à être disposée vers une source de chaleur.

2. Procédé selon la revendication 1, dans lequel la composition thermostable de décor est de même nature que la composition thermostable de fond.

3. Procédé selon l'une quelconque des revendications précédentes, comprenant en outre, avant l'étape d'application de la composition de décor, l'étape suivante :
- séchage de ladite couche de fond (3), quand la composition de fond est une composition sol-gel ou une composition aqueuse comprenant une dispersion de résine fluorocarbonée.

4. Procédé selon l'une quelconque des revendications précédentes, dans lequel l'enlèvement et/ou le déplacement d'une partie de la composition thermostable de décor est réalisé par la pression d'un outil ou d'un jet d'air comprimé sur la surface de la couche de décor (4) alors que le support (2) est en rotation.

5. Procédé selon l'une quelconque des revendications précédentes, l'outil est l'un d'un pinceau, d'une brosse, d'un peigne, d'une éponge, d'un tampon abrasif.

6. Procédé selon l'une quelconque des revendications précédentes, dans laquelle le traitement mécanique est réalisé de manière à faire apparaître au moins partiellement la couche de fond (3) sous-jacente.

7. Procédé selon l'une quelconque des revendications précédentes, dans lequel la composition de décor et la composition de fond ne présentent pas le même rendu visuel.

8. Procédé selon l'une quelconque des revendications précédentes, dans lequel la composition de décor et/ou la composition de fond comprennent au moins un pigment et/ou des paillettes.

9. Procédé selon la revendication 8, dans lequel les pigments des compositions thermostables de fond et de décor sont indépendamment choisis parmi les pigments thermostables organiques ou inorganiques.

10. Procédé selon l'une quelconque des revendications 8 et 9, dans lequel les paillettes des compositions thermostables de fond et de décor sont indépendamment choisies parmi les paillettes d'aluminium enrobées et les paillettes de mica.

11. Procédé selon l'une quelconque des revendications précédentes, comprenant en outre, avant l'étape de traitement thermique de densification :
• une étape d'application d'au moins une composition thermostable de finition translucide sur ladite couche de décor (4), éventuellement séchée, pour former une couche de finition (5) ; et
• une étape de séchage de la couche de finition (5) lorsque la composition thermostable de finition est une barbotine aqueuse de fritte d'émail ou une composition aqueuse comprenant une dispersion de résine fluorocarbonée, et éventuellement lorsque la composition thermostable de finition est une composition sol-gel.

12. Procédé selon la revendication 11, dans lequel la composition thermostable de finition est de même nature que la composition thermostable de décor.

## Patentansprüche

1. Verfahren zum Dekorieren eines Küchenartikels (1), umfassend einem Träger (2), wobei das Verfahren die folgenden Schritte umfasst:
- Bereitstellen eines Trägers (2), der zwei gegenüberliegende Seiten (21, 22) umfasst;
- Aufbringen mindestens einer wärmestabilen Grundierungszusammensetzung auf einen Bereich einer der Seiten (21) des Trägers (2), um mindestens eine Grundierungsschicht (3) zu bilden, wobei die wärmestabile Grundierungszusammensetzung eine Sol-Gel-Zusammensetzung oder eine wässrige Emaillefrittenaufschlämmung oder eine wässrige Zusammensetzung ist, die eine Dispersion von Fluorkohlenstoffharz umfasst;
- Aufbringen mindestens einer thermostabilen Dekorzusammensetzung auf die Grundierungsschicht (3) zur Bildung mindestens einer Dekorschicht (4), wobei die thermostabile Dekorzusammensetzung eine Sol-Gel-Zusammensetzung oder eine wässrige Emaillefrittenaufschlämmung oder eine wässrige Zusammensetzung ist, die eine Dispersion von Fluorkohlenstoffharz umfasst;
- mechanische Behandlung der Oberfläche der Dekorschicht (4) zur Erreichung eines Dekors, wobei die mechanische Behandlung die Entfernung und / oder Verlagerung eines Teils der thermostabilen Dekorzusammensetzung durch den Druck und die Verschiebung eines Werkzeugs oder eines Luftstrahls umfasst, der auf die Oberfläche der Dekorschicht (4) verdichtet ist;
- Trocknen der mechanisch behandelten Dekorschicht (4), wenn die thermostabile Dekorzusammensetzung eine wässrige Emaillefrittenaufschlämmung oder eine wässrige Zusammensetzung, die eine Dispersion von Fluorkohlenstoffharz umfasst, ist, und gegebenenfalls wenn die thermostabile Dekorzusammensetzung eine Sol-Gel-Zusammensetzung ist; und
- Wärmebehandlung zur Verdichtung des beschichteten Trägers (2), wobei keine Wärmebehandlung der Verdichtung des beschichteten Trägers zwischen dem Schritt des Aufbringens der wärmestabilen Grundierungszusammensetzung und dem Schritt des Aufbringens der wärmestabilen Dekorzusammensetzung durchgeführt wird, und
wobei der Küchenartikel ein Artikel ist, dessen mindestens durch die Dekorschicht nicht beschichtete Seite eine innere konkave Seite ist, die dazu bestimmt ist, seitens der Nahrungsmittel angeordnet zu sein, die geeignet sind in den Artikel eingeführt zu werden, und wobei eine zweite der gegenüberliegenden Seiten eine äußere konvexe Seite ist, die dazu bestimmt ist, zu einer Wärmequelle hin angeordnet zu sein.

2. Verfahren nach Anspruch 1, wobei die thermostabile Dekorzusammensetzung von der gleichen Art wie die wärmestabile Grundierungszusammensetzung ist.

3. Verfahren nach einem der vorhergehenden Ansprüche, ferner umfassend vor dem Schritt des Aufbringens der Dekorzusammensetzung den folgenden Schritt:
- Trocknen der Grundierungsschicht (3), wenn die Grundierungszusammensetzung eine Sol-Gel-Zusammensetzung oder eine wässrige Zusammensetzung ist, die eine Dispersion von Fluorkohlenstoffharz umfasst.

4. Verfahren nach einem der vorhergehenden Ansprüche, wobei das Entfernen und / oder Verlagern eines Teils der thermostabilen Dekorzusammensetzung durch Druck eines Werkzeugs oder eines Luftstrahls, der auf die Oberfläche der Dekorschicht (4) verdichtet ist, erreicht wird, während sich der Träger (2) dreht.

5. Verfahren nach einem der vorhergehenden Ansprüche, wobei das Werkzeug ein Pinsel, eine Bürste, ein Kamm, ein Schwamm oder ein Scheuerkissen ist.

6. Verfahren nach einem der vorhergehenden Ansprüche, wobei die mechanische Behandlung durchgeführt wird, um die darunter liegende Grundierungsschicht (3) zumindest teilweise freizulegen.

7. Verfahren nach einem der vorhergehenden Ansprüche, wobei die Dekorzusammensetzung und die Grundierungszusammensetzung nicht den gleichen visuellen Effekt vorweisen.

8. Verfahren nach einem der vorhergehenden Ansprüche, wobei die Dekorzusammensetzung und / oder die Grundierungszusammensetzung mindestens ein Pigment und / oder Flocken umfasst.

9. Verfahren nach Anspruch 8, wobei die Pigmente der thermostabilen Grundierungs- und Dekorzusammensetzungen unabhängig voneinander aus organischen oder anorganischen thermostabilen Pigmenten ausgewählt sind.

10. Verfahren nach einem der Ansprüche 8 und 9, wobei die Flocken der wärmestabilen Grundierungs- und Dekorzusammensetzungen unabhängig voneinander aus beschichteten Aluminiumflocken und Glimmerflocken ausgewählt sind.

11. Verfahren nach einem der vorhergehenden Ansprüche, ferner umfassend vor dem Wärmebehandlungsschritt zur Verdichtung:
• einen Schritt des Aufbringens mindestens einer wärmestabilen durchscheinenden Deckzusammensetzung auf die Dekorschicht (4), die gegebenenfalls getrocknet ist, um eine Deckschicht (5) zu bilden; und
• einen Schritt des Trocknens der Deckschicht (5), wenn die thermostabile Deckzusammensetzung eine wässrige Emaillefrittenaufschlämmung oder eine wässrige Zusammensetzung ist, die eine Dispersion von Fluorkohlenstoffharz umfasst, und gegebenenfalls, wenn die thermostabile Deckzusammensetzung eine Sol-Gel-Zusammensetzung ist.

12. Verfahren nach Anspruch 11, wobei die thermostabile Deckzusammensetzung von der gleichen Art wie die thermostabile Dekorzusammensetzung ist.

## Claims

1. Method for decorating a cooking vessel (1) comprising a substrate (2), said method comprising the following steps:
- providing a substrate (2) comprising two opposite surfaces (21, 22);
- applying at least one thermostable base composition over an area of one of the surfaces (21) of the substrate (2) to form at least one base layer (3), the thermostable base composition being a sol-gel composition, or an aqueous slurry of enamel frit or an aqueous composition comprising a fluorocarbon resin dispersion;
- applying at least one thermostable decorative composition on the base layer (3) to form at least one decorative layer (4), the thermostable decorative composition being a sol-gel composition, or an aqueous slurry of enamel frit or an aqueous composition comprising a fluorocarbon resin dispersion;
- mechanically treating the surface of the decorative layer (4) in order to produce a decorative, the mechanical treatment comprising a removal and/or a movement of a portion of the thermostable decorative composition by the pressure and the movement of a tool or of a compressed air jet on the surface of the decorative layer (4);
- drying of the decorative layer (4) mechanically treated when the thermostable decorative composition is an aqueous slurry of enamel frit or an aqueous composition comprising a fluorocarbon resin dispersion, and potentially when the thermostable decorative composition is a sol-gel composition; and
- thermal densification treatment of the coated substrate (2),
no thermal densification treatment of the coated substrate being carried out between the application step of the thermostable base composition and the application step of the thermostable decorative composition, and
the cooking vessel being a vessel of which the surface not coated at least by the decorative layer is a concave interior surface designed to be positioned on the side where food may be placed into said vessel, and an opposite second of said surfaces is a convex exterior surface designed to be positioned toward a heat source.

2. Method according to claim 1, wherein the thermostable decorative composition is of the same nature as the thermostable base composition.

3. Method according to any one of the preceding claims, further comprising, before the step of applying the decorative composition, the following step:
- drying of said base layer (3), when the base composition is a sol-gel composition or an aqueous composition comprising a fluorocarbon resin dispersion.

4. Method according to any one of the preceding claims, wherein the removal and/or the movement of a portion of the thermostable decorative composition is carried out by the pressure of a tool or of a compressed air jet on the surface of the decorative layer (4) while the substrate (2) is spinning.

5. Method according to any one of the preceding claims, the tool being one of the following: a paintbrush, a brush, a comb, a sponge, or an abrasive pad.

6. Method according to any one of the preceding claims, wherein the mechanical treatment is carried out in such way to make the underlying base layer (3) appear at least partially.

7. Method according to any one of the preceding claims, wherein the decorative composition and the base composition do not have the same visual appearance.

8. Method according to any one of the preceding claims, wherein the decorative composition and/or the base composition comprise at least one pigment and/or glitter.

9. Method according to claim 8, wherein the pigments of the thermostable base and decorative compositions are independently selected from among organic or inorganic thermostable pigments.

10. Method according to any one of claims 8 and 9, wherein the glitters of the thermostable base and decorative compositions are independently selected from among coated aluminium glitters and mica glitters.

11. Method according to any one of the preceding claims, further comprises, before the thermal densification treatment step:
• a step of applying at least one thermostable translucid finishing composition to said decorative layer (4), possibly dried, to form a finishing layer (5); and
• a step of drying the finishing layer (5) when the thermostable finishing composition is an aqueous slurry of enamel frit or an aqueous composition comprising a fluorocarbon resin dispersion, and potentially when the thermostable finishing composition is a sol-gel composition.

12. Method according to claim 11, wherein the thermostable finishing composition is of the same nature as the thermostable decorative composition.
